# EUROPÄISCHE PATENTANMELDUNG

(11) **EP 2 636 617 A1**
(43) Veröffentlichungstag der Anmeldung: **11.09.2013**
(21) Anmeldenummer: 12405026.1
(22) Anmeldetag: 08.03.2012
(51) Int. Cl.: B65G 15/32, B65G 15/48, B65G 23/06, F16G 3/02

(54) **Transportsystem mit aus flexiblen Bandstücken zusammengesetztem Endloselement**

(71) Anmelder: Rychiger AG, 3613 Steffisburg (CH)
(72) Erfinder: Aeschlimann, Daniel, 3613 Steffisburg (CH)
(74) Vertreter: Rüfenacht, Philipp Michael

(57) **Zusammenfassung**

Transportsystem (1) mit einem mit mindestens zwei Umlenkrädern (10,11) zusammenwirkenden Endloselement (2). Das Endloselement (2) ist aus einer Mehrzahl von flexiblen Bandstücken (4), insbesondere aus flexiblen Stahlbändern, zusammengesetzt. Benachbarte flexible Bandstücke (4) sind durch Verbindungselemente (3) miteinander verbunden. Die Verbindung der flexiblen Bandstücke (4) mit den Verbindungselementen (3) erfolgt mittels kraftschlüssiger Klemmverbindungen. Mittels Klemmverbindungen lassen sich flexible Bandstücke (4) ohne viel Aufwand und schnell mit den Verbindungselementen (3) verbinden. Zudem müssen die flexiblen Bandstücke (4) nicht sehr präzise hergestellt werden, da bei einer Klemmverbindung kleine Unterschiede in deren Länge durch ein nicht bündiges Anordnen von benachbarten flexiblen Bandstücken (4) kompensiert werden können.

## Beschreibung

### Technisches Gebiet

Die Erfindung betrifft ein Transportsystem mit einem mit mindestens zwei Umlenkrädern zusammenwirkenden Endloselement, welches aus einer Mehrzahl an flexiblen Bandstücken, zusammengesetzt ist, wobei benachbarte flexible Bandstücke durch Verbindungselemente miteinander verbunden sind.

### Stand der Technik

Transportsysteme mit einem Endloselement, wie z. B. Förder- oder Transportbänder, werden zur Beförderung von Gütern oder zum Verschieben von Bauteilen oder Halbfabrikaten in Produktionsprozessen vielfältig eingesetzt. Da die Verwendung eines einzelnen, langen Endlosbandes in vielen Fällen nachteilig ist, wurden bereits eine Vielzahl an modular aufgebauten Endloselementen entwickelt.

Die EP 2 206 578 B1 (Otto Bihler Handels-Beteiligungs-GmbH) offenbart beispielsweise ein Transportband für eine Vorschubvorrichtung. Das Transportband ist aus einer Vielzahl von hintereinander verbundenen Platten, vorzugsweise aus Federstahlblech, zusammengesetzt. Benachbarte Platten überlappen sich an ihren Längsenden und sind im Überlappungsbereich miteinander verbunden. Die Verbindung erfolgt beispielsweise über Bolzen. Die Platten sind durchgehend biegeelastisch, während die Verbindung zwischen den Platten gelenklos erfolgt. Die Bolzen verfügen über Antriebsmitnehmer, welche mit Vertiefungen am Umfang von Umlenkrollen zusammenwirken. An den Platten können ferner Werkstückträger angebracht sein.

Die DE 20 61 148 C2 (Ferguson Macine Co. S. A.) beschreibt ein flexibles, selbsttragendes und zur Übertragung von Zugkräften geeignetes Band, welches beispielsweise für einen Bandbeförderer geeignet ist. Das Band besteht aus einem Zugteil mit einem oder mehreren Zugteilelementen sowie daran befestigten Trägerteilen. Die Trägerteile dienen als Verbindungsstücke zwischen den Zugteilelementen und können auch als Trägerplatten fungieren. Die Zugteilelemente können aus Federstahl gefertigt sein und sind mit den Trägerteilen verschraubt, wobei zwei benachbarte Zugteilelemente über ein Trägerteil miteinander verbunden sind. Der Antrieb des Bandes erfolgt über an einem Umlenkrad angebrachte Zapfen, welche in auf den Zugteilelementen angebrachte Löcher eingreifen können.

Die GB 541,693 (Baker Perkins Limited) offenbart Endlosbänder für industrielle Backöfen oder ähnliche Anwendungen. Die Endlosbänder werden durch ein Kompositband gebildet, welches eine Folge von längs angeordneten, flexiblen, dünnen Metallelementen umfasst, welche jeweils miteinander scharnierartig oder flexibel verbunden sind. In einer bevorzugten Ausführungsform werden die Metallelemente dazu jeweils an ihren Enden in der Art eines Scharniers umgebogen. Die Verbindungsglieder wirken mit Ausnehmungen in einem Antriebselement zusammen, um das Band anzutreiben.

Die DE 28 38 245 A1 (The Laitram Corp.) beschreibt ein Band oder einen Gurtriemen, welcher aus Modulbausteinen aufgebaut ist, die beidseitig ineinandergreifenden Gliedenden bilden. Die Verbindung der Gliedenden miteinander ist dabei nicht-gelenkig unverschwenkbar ausgebildet, wobei diese Verbindung durch Schweissen zusätzlich versteift werden kann. Die Modulbausteine weisen zwischen den Gliedenden biegsame Mittelabschnitte auf.

Die EP 0 054 752 B1 (Draadindustrie Jonge Poerink B.V.) offenbart ein Gliedförderband aus plattenförmigen Gliedern, die mit scharnierartigen Gelenken miteinander verbunden sind. Muffen dieser Gelenke wirken nach Art eines Kettenrades mit einem Zahnrad zusammen, um das Gliedförderband anzutreiben.

Die EP 0 954 497 B1 (UPS) zeigt einen Bandförderer, der aus einer Vielzahl an Plattformen aufgebaut ist. Benachbarte Plattformen sind durch flexible Verbindungselemente miteinander verbunden, wobei die Verbindungselemente mittels Formschluss mit den Plattformen verbunden sind. Die Verbindungselemente weisen zudem Zapfen auf, welche in entsprechende Ausnehmungen in einer als Antriebsrad dienenden Umlenkrolle eingreifen.

Nachteilig an den bekannten Transportsystemen der eingangs genannten Art ist, dass die Montage der einzelnen Elemente zeitaufwändig ist, da diese miteinander verschraubt beziehungsweise als Scharniere zusammengesteckt werden müssen. Dies macht auch ein Auswechseln einzelner Elemente kompliziert und langsam. Ausserdem erfordern scharnierartig ausgestaltete Verbindungen den regelmässigen Einsatz von Schmiermitteln, was insbesondere bei Transportbändern, die im Lebensmittel- oder Pharmabereich eingesetzt werden, wegen der Verunreinigungsgefahr nachteilig ist. Ferner unterliegen Scharnierverbindungen einem gewissen Verschleiss, was die Lebensdauer eines Endloselements begrenzt. Zudem müssen die Elemente relativ präzise gefertigt werden, damit beim Zusammenbau die Elemente zueinander respektive mit den Scharnieren zusammenpassen, was deren Fertigung verteuert.

### Darstellung der Erfindung

Aufgabe der Erfindung ist es, eine dem eingangs genannten technischen Gebiet zugehörende Transporteinrichtung zu schaffen, bei welcher das Endloselement aus möglichst kostengünstigen Teilen und in möglichst einfacher Art und Weise zusammengebaut werden kann.

Die Lösung der Aufgabe ist durch die Merkmale des Anspruchs 1 definiert. Gemäss der Erfindung werden die flexiblen Bandstücke mit den Verbindungselementen mittels Klemmverbindungen kraftschlüssig verbunden.

Mittels Klemmverbindungen lassen sich Bandstücke ohne viel Aufwand und schnell mit den Verbindungselementen verbinden, was den Zusammenbau eines Endloselements sowie das Auswechseln einzelner Bandstücke wesentlich vereinfacht. Zudem erfordert diese Art der Verbindung keinerlei besondere Ausgestaltung der Bandstücke, wie z. B. Löcher, wodurch diese einfach und kostengünstig herstellbar sind. Zudem müssen die flexiblen Bandstücke nicht sehr präzise hergestellt werden, da bei einer Klemmverbindung kleine Unterschiede in deren Länge durch ein nicht bündiges Anordnen von benachbarten flexiblen Bandstücken kompensiert werden können. Dies ermöglicht das Anordnen der Verbindungselemente in präzisen, regelmässigen Abständen trotz kleiner Unterschiede in den Längen der einzelnen flexiblen Bandstücke. Da die Klemmverbindung ausserdem nicht ausschlägt unterliegt diese auch keinerlei Verschleiss, was für die Lebensdauer des Endloselements von Vorteil ist.

Unter Kraftschluss wird in der vorliegenden Anmeldung verstanden, dass zwei Körper nur durch Haftreibung relativ zueinander gehalten werden. Bei der vorliegenden Klemmverbindung werden zwei sich gegenüberliegende Seiten eines flexiblen Bandstücks zwischen zwei Flächen eines Verbindungselements eingeklemmt, wodurch das flexible Bandstück durch die auf den beiden Seiten auftretende Haftreibungskraft mit dem Verbindungselement verbunden wird.

Die Verbindungselemente sind vorzugsweise starr ausgebildet. Dadurch wird erreicht, dass eine Biegung des Endloselements, z.B. um die Umlenkräder, alleine durch die Flexibilität der Bandstücke erreicht wird. Da hierbei keine relative Bewegung zwischen zwei Bandstücken oder zwischen Bandstücken und Verbindungselementen stattfindet, bedarf eine solche Anordnung keinerlei Schmierung. Zudem wird die Bildung von Abrieb, wie dieser bei Gelenken auftreten kann, gänzlich vermieden. Dies ist insbesondere beim Einsatz der Transporteinrichtung im Lebensmittel- oder Pharmabereich vorteilhaft, da dadurch keinerlei Kontamination der transportierten Güter durch Schmiermittel oder Abriebpartikeln auftreten kann.

Ausserdem treten bei einer starren Ausgestaltung der Verbindungselemente bei einer Biegung keinerlei Zwischenräume zwischen den Bandstücken und den Verbindungselementen auf. Dadurch wird verhindert, dass zu transportierendes Gut zwischen die flexiblen Bandstücke und die Verbindungselemente gelangen kann, wodurch diese beispielsweise verklemmt werden können.

Alternativ können die Verbindungselemente jedoch auch flexibel ausgestaltet sein, z. B. mittels eines Scharniers oder durch Ausgestaltung mindestens eines Teilbereichs der Verbindungselemente aus einem flexiblen Material.

Bevorzugt weisen die Verbindungselemente mindestens zwei gegeneinander verspannbare Backen auf, welche derart ausgebildet sind, dass zwei benachbarte Bandstücke zwischen den Backen eingeklemmt werden können.

Die Ausgestaltung der Klemmverbindungen mittels Backen lässt sich konstruktiv einfach realisieren. Um die zum Herausziehen der Bandstücke erforderliche Ausreisskraft zusätzlich zu erhöhen, kann auf den zu den Bandstücken hin orientierten Seiten der Backen zusätzlich eine Oberflächenstruktur vorgesehen sein, beispielsweise eine Riffelung und/oder für die Kontaktfläche wird ein Material verwendet, welches sich durch hohe Reibungskräfte mit dem Bandmaterial auszeichnet. Zudem lassen sich durch entsprechende Schliess- oder Spanvorrichtungen zwei Backen einfach und schnell mit hoher Kraft gegen ein zwischen den Backen eingespanntes Bandstück drücken. Mit Vorteil wirken die Backen über ausgedehnte Kontaktflächen auf die Bandstücke ein, so dass eine mechanische Beschädigung der Bandstücke vermieden wird. Es ist weiter von Vorteil, wenn sich die benachbarten Bandstücke im Bereich der Verbindungselemente nicht überlappen sondern im Wesentlichen in derselben Ebene gehalten sind. So können ein Versatz benachbarter Bandstücke und damit ein unrunder Lauf des Transportsystems vermieden werden. Ferner wird dadurch die Auswechslung eines einzelnen der Bandstücke wesentlich vereinfacht.

Alternativ könnten die Bandstücke allerdings auch durch andere Vorrichtungen kraftschlüssig mit den Verbindungselementen verbunden werden. Beispielsweise könnten die Bandstücke zwischen den Verbindungselementen und der Unterseite von an ihren Rändern angeordneten Schraubenköpfen eingeklemmt werden.

Die mindestens zwei Backen können vorzugsweise mittels mindestens einer Feder, einer Schraube und/oder einer Gewindestange gegeneinander verspannt werden. Dies ermöglicht eine möglichste einfache und komfortabel zu bedienende Vorrichtung zum Verspannen der Backen gegeneinander. Durch die Verwendung von mindestens einer Schraube und/oder einer Gewindestange können zudem mit denselben Verbindungselementen Bandstücke mit unterschiedlichen Dicken eingespannt werden.

Vorzugsweise sind die Verbindungselemente sowie mindestens ein Umlenkrad derart ausgebildet, dass mindestens ein Teilbereich der Verbindungselemente mit mindestens einem Teilbereich des Umlenkrads zusammenwirken kann.

Dadurch wird eine Kraftübertragung vom Umlenkrad auf die Verbindungselemente möglich, um das Endloselement anzutreiben, ohne dass zusätzliche Antriebsvorrichtungen vorgesehen werden müssen. Das Zusammenwirken des mindestens einen Umlenkrades mit den Verbindungselementen erfolgt vorzugsweise über einen Formschluss zwischen einem Teilbereich des Umlenkrades mit einem Teilbereich der Verbindungselemente.

Alternativ hierzu kann auch mindestens ein Umlenkrad mit den flexiblen Bandstücken zusammenwirken. Beispielsweise könnte das mindestens eine Umlenkrad im Sinne eines Kettenrades in unterhalb der flexiblen Bandstücke angeordnete Strukturen eingreifen.

Bevorzugt steht ein Teilbereich der Verbindungselemente von diesen ab, um in am Umfang des mindestens einen Umlenkrades angeordnete Vertiefungen einzugreifen.

Der von den Verbindungselementen abstehende Teilbereich kann in einer beliebigen Form vorliegen, wie z. B. als Zapfen, Keil, etc. Die Vertiefungen im Umlenkrad weisen eine Form auf, die geeignet ist, die abstehenden Teilbereiche der Verbindungselemente aufzunehmen. Der Abstand der Vertiefungen auf dem Umfang des Antriebsrades zueinander entspricht dabei der Länge der eingesetzten Bandstücke. Dieser Abstand sollte so gewählt werden, dass zu jedem Zeitpunkt mindestens ein Teilbereich eines Verbindungselements mit einer Vertiefung in Eingriff steht, da ansonsten das Endlosband nicht mehr angetrieben werden kann. Alternativ kann bei zwei angetriebenen Umlenkrädern der Abstand der Vertiefungen sowie die Länge der Bandstücke derart ausgewählt sein, dass zu jedem Zeitpunkt an mindestens einem Umlenkrad mindestens ein Teilbereich eines Verbindungselements mit einer Vertiefung in Eingriff steht.

Die Geometrie des Teilbereichs der Verbindungselemente ist vorzugsweise derart ausgebildet, dass diese der Geometrie der Vertiefungen entspricht.

Entsprechen sich die beiden Geometrien wird ein Abknicken der Bandstücke an deren zu den Verbindungselementen angrenzenden Bereichen weitgehend verhindert, da zwischen Umlenkrad und Bandstück kein Zwischenabstand entsteht. Zudem wird die Kraftübertragung zwischen Umlenkrad und Verbindungselementen optimiert, da im Wesentlichen kein Spiel zwischen den Verbindungselementen und den Vertiefungen vorhanden ist.

Vorzugsweise ist mindestens ein Verbindungselement mit einer Transporteinheit, welche zur Aufnahme eines zu transportierenden Guts geeignet ist, verbunden. Die Transporteinheit kann je nach zu transportierenden Gut unterschiedlich ausgestaltet sein. Beispielsweise kann es sich bei der Transporteinheit um eine Platte, eine Lochplatte, eine Wanne oder um eine Halterung handeln.

Bevorzugt ist jedes Verbindungselement mit einer Transporteinheit verbunden. Alternativ kann auch nur eine bestimmte Anzahl an Verbindungselementen eines Endloselements mit einer Transporteinheit verbunden sein, beispielsweise nur jedes zweite oder jedes dritte Verbindungselement. Die Transporteinheit kann dabei entweder lösbar, z. B. mittels Schrauben, oder auch fest mit dem Verbindungselement verbunden sein.

Die Verbindung der Transporteinheit mit dem Verbindungselement hat den Vorteil, dass die Transporteinheiten dadurch in gleichbleibenden und regelmässigen Abständen auf dem Endloselement angeordnet werden können. Die Abstände können durch die Länge der Bandstücke sowie der Anzahl der Bandstücke zwischen zwei Transporteinheiten variiert werden.

Ferner kann in einer alternativen Ausführungsform der vorliegenden Erfindung mindestens eine Transporteinheit mit einem flexiblen Bandstück verbunden sein. Dies erlaubt eine von den Verbindungselementen unabhängige Befestigung der Transporteinheiten am Endloselement. Dies kann insbesondere dann vorteilhaft sein, wenn die mindestens eine Transporteinheit ansonsten das Zusammenwirken der Verbindungselemente mit dem mindestens einen Umlenkrad stören oder behindern würde.

Mindestens ein Verbindungselement weist vorzugsweise einen Führungswagen auf, welcher zumindest abschnittweise auf im Transportsystem angeordneten Führungsschienen führbar ist.

Dies ermöglicht eine möglichst genaue Führung des Endloselements in der Transportvorrichtung, da ein Durchhängen oder seitliches Auslenken des Endloselements durch den Führungswagen verhindert wird. Ist eine Transporteinheit am Verbindungselement angebracht, kann der Führungswagen zudem die Gewichtskraft des zu transportierenden Guts aufnehmen, wodurch eine übermässige Spannung des Endloselements verhindert werden kann.

Alternativ hierzu kann mindestens ein Führungswagen auch direkt mit einer Transporteinheit verbunden sein. Dies hat den Vorteil, dass Kräfte und Momente, welche auf die Transporteinheit einwirken, unmittelbar abgeleitet werden können, ohne dass diese auf ein Verbindungselement einwirken.

Die Verwendung von in Führungsschienen führbaren Wagen ist generell bei allen Endloselementen, welche aus einer Vielzahl an flexiblen Bandstücken bestehen, möglich. Deren Anwendung ist demnach nicht explizit auf die erfindungsgemässen Endloselemente mit Klemmverbindungen beschränkt, wenn dies auch eine bevorzugte Ausführungsform darstellt.

Bevorzugt sind im Bereich der mindestens zwei Umlenkräder die Führungsschienen unterbrochen, wobei der Führungswagen derart ausgestaltet ist, dass dieser nach Passieren eines Umlenkrads auf eine Führungsschiene einführbar ist.

Durch den Unterbruch der Führungsschienen im Bereich der mindestens zwei Umlenkräder können die Führungswagen und somit die damit verbundenen Verbindungselemente frei bewegbar um das Umlenkrad geführt werden. Die Führungswagen können dabei derart ausgestaltet sein, dass diese selbstständig auf eine Führungsschiene einführbar sind. Alternativ können an den Enden der Führungsschienen Vorrichtungen vorgesehen sein, welche die Einführung des mindestens einen Führungswagens ermöglichen oder erleichtern.

Der mindestens eine Führungswagen ist vorzugsweise derart ausgebildet, dass dieser mit mindestens zwei Seiten der Führungsschienen zusammenwirkt. Bevorzugt wirkt der Führungswagen mit zwei einander gegenüberliegenden Seiten der Führungsschienen zusammen. Ferner kann der mindestens eine Führungswagen auch mit drei oder mehr Seiten der Führungsschienen zusammenwirken.

Die ermöglicht die Aufnahme von allen Kräften und Momenten, welche nicht in die Transportrichtung gerichtet sind, durch den Führungswagen. Damit wird das Endlosband weitgehend von Kräften entlastet, welche nicht in die Transportrichtung gerichtet sind.

Der mindestens eine Führungswagen wirkt vorzugsweise über Räder oder Rollen mit den Führungsschienen zusammen. Alternativ kann der mindestens eine Führungswagen jedoch auch mittels von auf den Führungsschienen gleitenden Schlitten oder ähnliches mit den Führungsschienen zusammenwirken.

Alternativ hierzu kann der mindestens eine Führungswagen auch nur mit einer Seite der Führungsschienen zusammenwirken. Beispielsweise kann es genügen, wenn der mindestens eine Führungswagen nur mit der von den Umlenkrädern wegzeigenden Seite der Führungsschienen zusammenwirkt, wobei in diese Richtung weisende Kräfte durch eine geeignete Vorspannung des Endloselements kompensiert werden können. Ferner kann der mindestens eine Führungswagen nur mit der Oberseite der Führungsschienen zusammenwirken, wobei seitliche Bewegungen des Führungswagens durch geeignete Führungsanordnungen, wie beispielsweise einer Nut, in die der Führungswagen eingreifen kann, verhindert werden.

Bevorzugt verfügt der mindestens eine Führungswagen über mindestens zwei Rollen, welche derart angeordnet sind, dass sie mindestens auf zwei gegenüberliegenden Seiten der Führungsschienen greifen.

Die Verwendung von Rollen ermöglicht eine präzise Führung des mindestens einen Führungswagens auf den Führungsschienen, wobei gleichzeitig nur ein geringer Rollwiderstand erzeugt wird. Vorzugsweise weist der mindestens eine Führungswagen je zwei Rollen auf, welche auf gegenüberliegende Seiten der Führungsschienen greifen. Durch die Anordnung von je zwei Rollen pro Seite können auf die Transporteinheit wirkende Drehmomente durch den Führungswagen aufgenommen werden.

Alternativ kann der mindestens eine Führungswagen über drei Rollen verfügen, wobei zwei Rollen auf einer Seite und eine Rolle auf der gegenüberliegenden Seite der Führungsschienen eingreifen.

Die Führungsschienen sind bevorzugt in der Form eines T- oder I-Profils und die mindestens zwei Rollen als Nutrollen ausgebildet.

Die beidseitigen Flansche der Führungsschienen greifen in die Nuten der Rollen ein und ermöglichen somit eine präzise Führung des Führungswagens. Vorzugsweise weist die Nut der Rollen einen abgerundeten oder dreieckigen Querschnitt auf. Ein derartiges Profil ermöglicht eine automatische Zentrierung der Rollennut auf den Flanschen der Führungsschienen.

Die mindestens zwei Umlenkräder bestehen bevorzugt aus zwei voneinander beabstandeten Umlenkradteilen. Die Umlenkradteile sind durch eine Welle miteinander verbunden, wobei der Abstand zwischen den Umlenkradteilen derart gewählt ist, dass zwischen diesen ein Führungswagen geführt werden kann.

Dadurch kann sich der mindestens eine Führungswagen oder zumindest Teile davon auch auf der Seite des Endloselements erstrecken, welche den Umlenkrädern zugewandt ist, ohne dass dadurch das Zusammenwirken des Endloselements mit den Umlenkrädern beeinträchtigt wird. Dies ermöglicht eine platzsparende Bauweise der Transportvorrichtung. Zudem kann dadurch auch die Betriebssicherheit erhöht werden, da ausserhalb des Endloselements keine sich bewegenden Teile angeordnet sind, welche für das Bedienpersonal eine Gefahr darstellen können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Teilausschnitt eines erfindungsgemässen Endloselements;
- Fig. 2: eine perspektivische Ansicht einer beispielhaften Ausführungsform einer erfindungsgemässen Transporteinrichtung;
- Fig. 3: eine schematische und vereinfachte Darstellung der Transporteinrichtung der Figur 2 in einer Draufsicht;
- Fig. 4: eine Seitenansicht eines Umlenkrades der Transporteinrichtung aus der Figur 2;
- Fig. 5: eine perspektivische Detailansicht eines Führungswagens; und
- Fig. 6: eine Detaildarstellung eines mit einem Teilbereich eines Umlenkrades in Eingriff stehenden Verbindungselements.

Grundsätzlich sind in den Figuren gleiche Teile mit gleichen Bezugszeichen versehen.

### Wege zur Ausführung der Erfindung

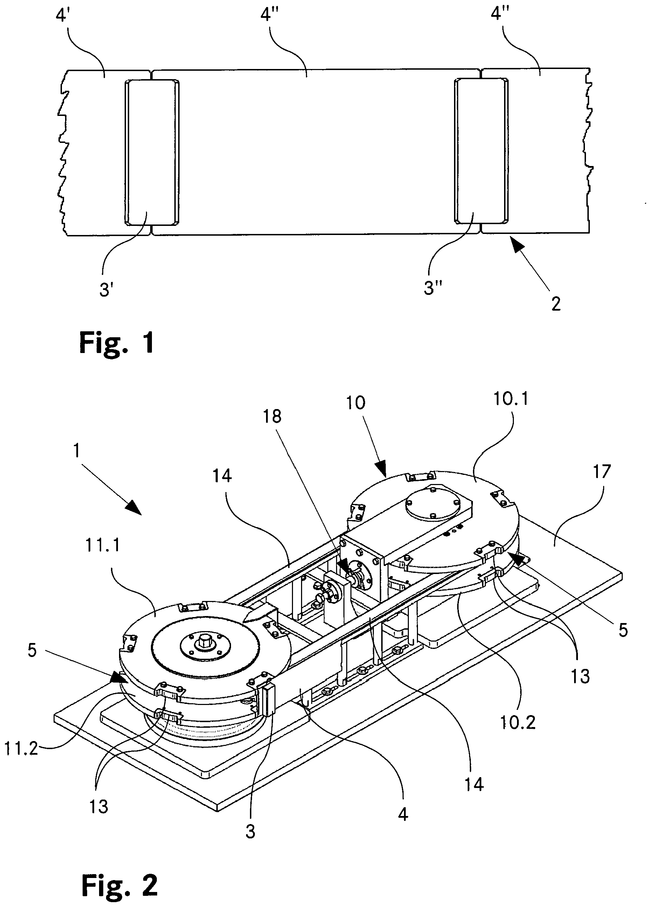

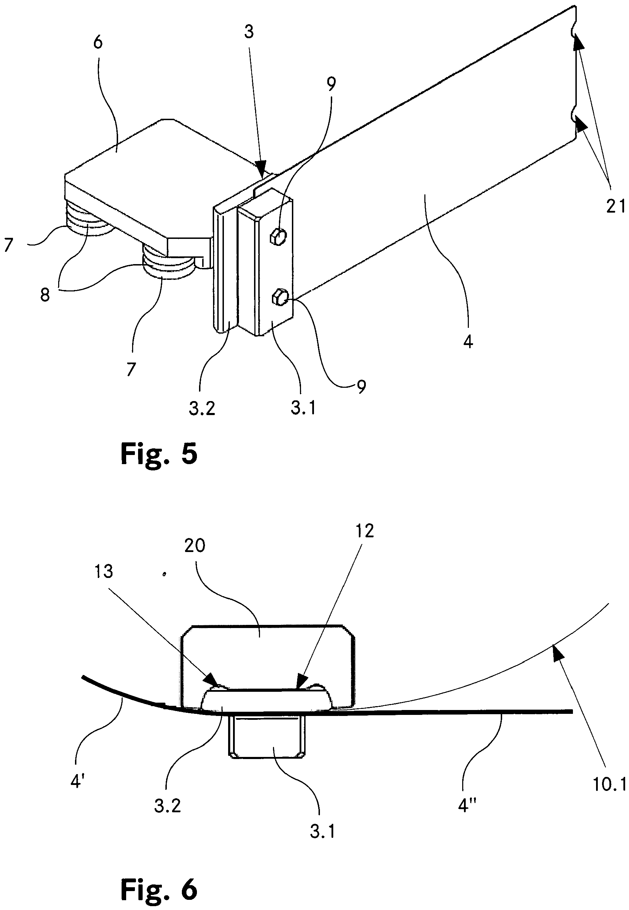

Die Figur 1 zeigt einen Teilausschnitt eines Endloselements 2 gemäss der vorliegenden Erfindung. Das Endloselement ist aus einer Vielzahl an Bandstücken 4', 4", 4"' zusammengesetzt. Benachbarte Bandstücke 4', 4", 4"' sind durch Verbindungselemente 3', 3" miteinander verbunden. Die Verbindungselemente 3',3" sind über eine Klemmverbindung kraftschlüssig mit den jeweiligen Bandstücken 4', 4", 4"' verbunden. Vorzugsweise handelt es sich bei den flexiblen Bandstücken 4', 4", 4"' um flexible Stahlbänder. Die Länge, Breite und Dicke der flexiblen Bandstücke 4', 4", 4'" kann je nach Transportsystem, für die das Endloselement 2 eingesetzt werden soll, variieren. Die Verbindungselemente sind weiter unten, im Zusammenhang mit der Figur 5, näher beschrieben.

Die Figur 2 ist eine perspektivische Ansicht eines Transportsystems 1 gemäss der vorliegenden Erfindung. Das Transportsystem ist auf einer Halterung 17 angebracht. Das Transportsystem 1 verfügt über zwei Umlenkräder 10, 11, welche ein Endloselement 2 gemäss der Figur 1 aufspannen können. Von diesem Endloselement 2 ist lediglich ein Bandstück 4, welches mit einem Verbindungselement 3 verbunden ist, in der Figur 2 gezeigt. Die beiden Umlenkräder 10,11 bestehen jeweils aus einem oberen Umlenkradteil 10.1, 11.1 sowie einem unteren Umlenkradteil 10.2, 11.2. Die beiden Teile der Umlenkräder 10, 11 sind über eine Welle miteinander verbunden (nicht gezeigt). Zwischen den beiden Teilen der Umlenkräder 10, 11 befindet sich ein Zwischenraum 5, welcher gross genug ist, um einen am Verbindungselement 3 angebrachten Führungswagen (nicht gezeigt) aufzunehmen.

Führungsschienen 14 sind zwischen den beiden Umlenkrädern 10, 11 angebracht und ermöglichen eine genaue Führung der Verbindungselemente 3 mittels ihrer Führungswagen. Die Führungsschienen 14 erstrecken sich bis zwischen die oberen Umlenkradteile 10.1, 11.1 und die unteren Umlenkradteile 10.2, 11.2 der Umlenkräder 10, 11. Die Führungsschienen 14 sind in den Bereichen der Umlenkräder, bei denen ein Umlenken des Endloselements erfolgt, unterbrochen. Die oberen Umlenkradteile 10.1, 11.1 sowie die unteren Umlenkradteile 10.2, 11.2 verfügen an ihrem Umfang über Vertiefungen 13, wobei jeweils eine Vertiefung 13 eines oberen Umlenkradteils 10.1, 11.1 und eine Vertiefung 13 eines unteren Umlenkradteils 10.2, 11.2 übereinander angeordnet sind. Die Vertiefungen 13 weisen eine Form auf, welche zur Aufnahme eines Teilbereichs eines Verbindungselements 3 geeignet ist. Bei der gezeigten Ausführungsform sind die Vertiefungen 13 im Wesentlichen als gleichschenkliges Trapez geformt, wobei die Schenkel eine leichte konkave Krümmung aufweisen. Dadurch kann mindestens ein angetriebenes Umlenkrad 10 mit den Verbindungselementen 3 zusammenwirken, um eine Kraftübertragung vom angetriebenen Umlenkrad 10 auf das Endloselement zu ermöglichen. Durch die Form der Vertiefungen 13 wird zudem ein Abknicken der flexiblen Bandstücke 4 an deren Rändern verhindert. Das Umlenkrad 10 wird durch einen geeigneten Antrieb, wie beispielsweise einem Elektromotor, angetrieben. Die Transportvorrichtung 1 verfügt vorzugsweise über eine Spannvorrichtung 18, mit welcher das Endloselement 1 unter eine bestimmte Vorspannung gesetzt werden kann.

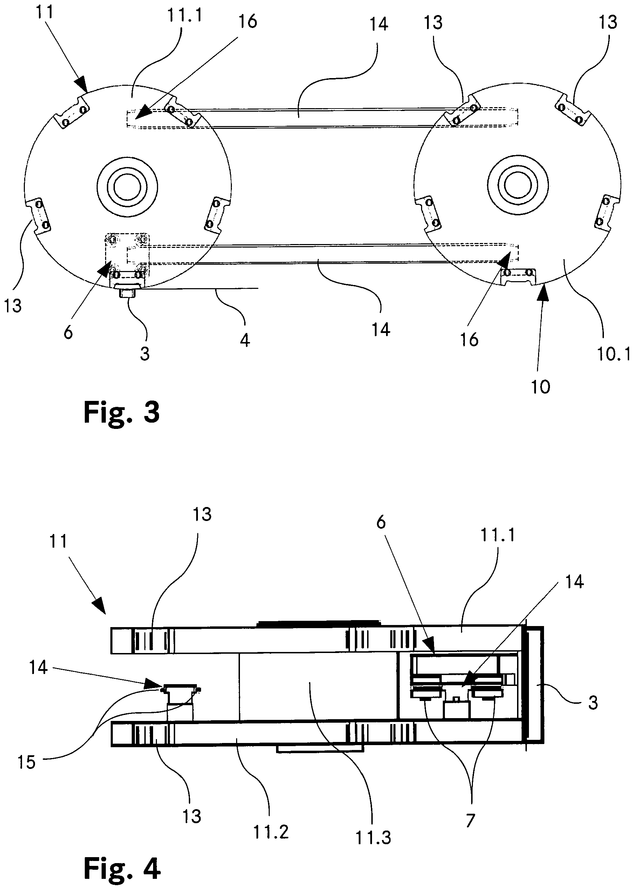

Die Figur 3 zeigt eine vereinfachte Ansicht der Transportvorrichtung 1 von oben. Wiederum sind nur ein flexibles Bandstück 4 sowie ein Verbindungselement 3 des Endloselements gezeigt. Ein mit dem Verbindungselement 3 verbundener Führungswagen 6, welcher sich bei der gezeigten Darstellung unterhalb des oberen Umlenkradteils 11.1 befindet, ist angedeutet. Dieser Führungswagen 6 wirkt mit einer der beiden Führungsschienen 14 zusammen, wobei sich die Führungsschiene 14 in dem Bereich, auf dem sich der Führungswagen 6 befindet, eine zur Laufrichtung der Führungswagen 6 rechtwinklig stehende Verjüngung 16 aufweist. Die Führungsschienen weisen an ihren beiden Enden derartige Verjüngungen 16 auf, um das Einführen der Führungswagen 6 auf die Führungsschienen zu vereinfachen. Bei der gezeigten beispielhaften Ausführungsform der Transporteinrichtung 1 erstrecken sich die geraden Führungsschienen 14 bis auf Höhe der Drehachsen der beiden Umlenkräder 10,11. Im Bereich, bei dem das Endloselement um die Umlenkräder 10,11 umgelenkt wird, sind die Führungsschienen 14 unterbrochen. Auf dieser Darstellung ist ersichtlich, wie ein Teilbereich des Verbindungselements 3 in eine der Vertiefungen 13, die am Umfang der beiden Umlenkräder 10,11 angeordnet sind, eingreift.

In der Figur 4 ist eine Seitenansicht des Umlenkrades 11 der Transportvorrichtung gemäss der Figur 2 dargestellt. Das obere Umlenkradteil 11.1 ist über eine Welle 11.3 mit dem unteren Umlenkradteil 11.2 verbunden. Jeweils eine am Umfang des oberen Umlenkradteils 11.1 und eine am Umfang des unteren Umlenkradteils 11.2 angeordnete Vertiefung 13 sind übereinander angeordnet. Das Profil der Führungsschienen 14 ist bei dieser Darstellung gut ersichtlich. Bei der gezeigten Ausführungsform der Transporteinrichtung 1 sind die Führungsschienen 14 als T-Profil ausgestaltet, welches am oberen Rand einen auf beiden Seiten überstehenden Flansch 15 aufweist. Nutrollen 7, welche an den Führungswagen 6 der Verbindungselemente 3 angebracht sind, wirken beidseitig mit den Führungsschienen 14 zusammen.

Die Figur 5 zeigt eine perspektivische Detailansicht eines Führungswagens 6. Der Führungswagen 6 weist vier Nutrollen 7 auf, welche derart angeordnet sind, dass je zwei dieser Nutrollen 7 einander gegenüberliegend beidseits mit einer Führungsschiene 14 zusammenwirken können. Die Nutrollen 7 weisen eine umlaufende Nut 8 auf, welche derart ausgebildet ist, dass der beidseits überstehende Flansch 15 der Führungsschienen 14 passend darin eingreifen kann. Die Nutrollen 7 sind ferner drehbar am Führungswagen 6 gelagert, beispielsweise über eine Drehachse oder über ein Kugellager. Das mit dem Führungswagen verbundene Verbindungselement 3 verfügt über zwei Backen 3.1,3.2, welche gegeneinander verspannt werden können, um das Verbindungselement 3 mittels einer kraftschlüssigen Klemmverbindung mit zwei benachbarten flexiblen Bandstücken 4 zu verbinden (hier nur ein Bandstück 4 gezeigt). Um die beiden Backen 3.1,3.2 gegeneinander verspannen zu können, weist das Verbindungselement 3 zwei Spannelemente 9 auf, welche in der gezeigten Ausführungsform als Spannschrauben ausgestaltet sind. Um trotz den vorhandenen Spannelementen 9 eine möglichst bündige Anordnung von zwei benachbarten Bandstücken 4 nebeneinander zu ermöglichen, sind an den Kanten der flexiblen Bandstücke 4 auf der Höhe der Spannelemente 9 entsprechende Aussparungen 21 vorgesehen.

In der Figur 6 ist eine vergrösserte Detailansicht eines mit einer Vertiefung 13 eines Umlenkradteils 10.1 zusammenwirkenden Verbindungselements 3 dargestellt. Das Verbindungselement verbindet die beiden benachbarten flexiblen Bandstücke 4',4" miteinander. Die flexiblen Bandstücke 4',4" sind dabei mittels einer kraftschlüssigen Klemmverbindung zwischen den Backen 3.1,3.2 mit dem Verbindungselement verbunden. Die Vertiefung 13 ist in einem Einsatz 20, beispielsweise aus gehärtetem Stahl, angeordnet, welcher in eine Aussparung des aus einem Metall bestehenden Umlenkradteils 10.1 eingesetzt ist. Ein Teilbereich 12 des Verbindungselements 3 greift in die Vertiefung 13 ein. Die Vertiefung 13 ist dabei derart geformt, dass der Teilbereich 12 des Verbindungselements 3 vollständig in die Vertiefung 13 aufgenommen werden kann. Damit liegen die flexiblen Bandstücke 4',4" beim Umlenken bündig an das Umlenkradteil 10.1 an, was ein Abknicken der flexiblen Bandstücke 4',4" verhindert.

Die Erfindung ist nicht auf das dargestellte Ausführungsbeispiel beschränkt. Die flexiblen Bandstücke können alternativ zum flexiblen Stahl auch aus anderen flexiblen Materialien bestehen, wie zum Beispiel aus einem Polymermaterial, einer flexiblen Metalllegierung oder auch aus einem Gewirke oder einem Gewebe. Die Transportvorrichtung kann auch über mehr als nur zwei Umlenkräder verfügen, von denen alle oder nur einige angetrieben werden. Je nach Grösse der Transportvorrichtung kann diese anstatt auf einer Halterung auch direkt auf dem Boden, beispielsweise einer Produktionshalle, verankert werden. Ferner können Transporteinheiten fest oder lösbar mit den Führungswagen oder den Verbindungselementen verbunden sein. Die Spannelemente, welche die beiden Backen gegeneinander verspannen, können beispielsweise auch als Gewindestangen oder Spannfedern ausgestaltet sein. Ferner kann zu Erhöhung der Ausreisskraft der flexiblen Bandstücke auf den Backen eine Struktur angebracht sein, wie beispielsweise eine aufgeraute Oberfläche oder eine Riffelung. Die Führungswagen können alternativ auch andere Elemente aufweisen, welche mit den Führungsschienen zusammenwirken, wie beispielsweise Räder oder Schlitten. Auch die Anzahl und Anordnung der Nutrollen lässt sich variieren. Ferner können zur Aufnahme der Gewichtskraft des zu transportierenden Guts weitere Schienen an der Vorrichtung angebracht sein, auf denen an der Unterseite der mindestens einen Transporteinheit angebrachte Rollen laufen können. Beispielsweise können derartige Schienen ausserhalb des Endloselements angeordnet sein.

## Patentansprüche

1. Transportsystem (1) mit einem mit mindestens zwei Umlenkrädern (10,11) zusammenwirkenden Endloselement (2), welches aus einer Mehrzahl von flexiblen Bandstücken (4), insbesondere aus flexiblen Stahlbändern, zusammengesetzt ist, wobei benachbarte flexible Bandstücke (4) durch Verbindungselemente (3) miteinander verbunden sind, **dadurch gekennzeichnet, dass** die flexiblen Bandstücke (4) mit den Verbindungselementen (3) mittels Klemmverbindungen kraftschlüssig verbunden sind.

2. Transportsystem (1) nach Anspruch 1, **dadurch gekennzeichnet, dass** die Verbindungselemente (3) starr ausgebildet sind.

3. Transportsystem (1) nach einem der Ansprüche 1 oder 2, **dadurch gekennzeichnet, dass** die Verbindungselemente (3) mindestens zwei gegeneinander verspannbare Backen (3.1,3.2) aufweisen, welche derart ausgebildet sind, dass zwei benachbarte Bandstücke (4',4") zwischen den Backen (3.1,3.2) eingeklemmt werden können.

4. Transportsystem (1) nach Anspruch 3, **dadurch gekennzeichnet, dass** die mindestens zwei Backen (3.1,3.2) mittels eines Spannelements (9), welches bevorzugt mindestens eine Feder, eine Schraube und/oder eine Gewindestange umfasst, gegeneinander verspannt werden können.

5. Transportsystem (1) nach einem der Ansprüche 1 bis 4, **dadurch gekennzeichnet, dass** die Verbindungselemente (3) sowie mindestens ein Umlenkrad (10,11) derart ausgebildet sind, dass mindestens ein Teilbereich (12) der Verbindungselemente (3) mit mindestens einem Teilbereich des Umlenkrads (10,11) zusammenwirken kann.

6. Transportsystem (1) nach Anspruch 5, **dadurch gekennzeichnet, dass** ein Teilbereich (12) der Verbindungselemente (3) von diesen absteht, um in am Umfang des mindestens einen Umlenkrades (10,11) angeordnete Vertiefungen (13) einzugreifen.

7. Transportsystem (1) nach Anspruch 6, **dadurch gekennzeichnet, dass** die Geometrie des Teilbereichs (12) der Verbindungselemente (3) derart ausgebildet ist, dass diese der Geometrie der Vertiefungen (13) entspricht.

8. Transportsystem (1) nach einem der Ansprüche 1 bis 7, **dadurch gekennzeichnet, dass** mindestens ein Verbindungselement (3) mit einer Transporteinheit, welche zur Aufnahme eines zu transportierenden Guts geeignet ist, verbunden ist.

9. Transportsystem (1) nach Anspruch 8, **dadurch gekennzeichnet, dass** mindestens ein Verbindungselement (3) einen Führungswagen (6) aufweist, welcher zumindest abschnittweise auf im Transportsystem (1) angeordneten Führungsschienen (14) führbar ist.

10. Transportsystem (1) nach Anspruch 9, **dadurch gekennzeichnet, dass** im Bereich der mindestens zwei Umlenkräder (10,11) die Führungsschienen (14) unterbrochen sind, wobei der mindestens eine Führungswagen (6) derart ausgestaltet ist, dass dieser nach Passieren eines Umlenkrads (10,11) auf eine Führungsschiene (14) einführbar ist.

11. Transportsystem (1) nach einem der Ansprüche 9 oder 10, **dadurch gekennzeichnet, dass** der Führungswagen (6) derart ausgebildet ist, dass dieser mit mindestens zwei Seiten der Führungsschienen (14) zusammenwirkt.

12. Transportsystem (1) nach einem der Ansprüche 9 bis 11, **dadurch gekennzeichnet, dass** der Führungswagen (6) über mindestens zwei Rollen (7) verfügt, welche derart angeordnet sind, dass sie mindestens auf zwei gegenüberliegenden Seiten der Führungsschienen (14) greifen.

13. Transportsystem (1) nach Anspruch 12, **dadurch gekennzeichnet, dass** die Führungsschienen (14) in der Form eines T- oder I-Profils und die mindestens zwei Rollen (7) als Nutrollen ausgebildet sind.

14. Transportsystem (1) nach einem der Ansprüche 9 bis 13, **dadurch gekennzeichnet, dass** die mindestens zwei Umlenkräder (10,11) aus zwei voneinander beabstandeten Umlenkradteilen (10.1,10.2; 11.1,11.2) bestehen, welche durch eine Welle (11.3) miteinander verbunden sind, wobei deren Abstand derart gewählt ist, dass zwischen den Umlenkradteilen (10.1,10.2; 11.1,11.2) ein Führungswagen geführt werden kann.
